# EUROPÄISCHE PATENTANMELDUNG

(11) **EP 1 326 202 A2**
(43) Veröffentlichungstag der Anmeldung: **09.07.2003**
(21) Anmeldenummer: 02026665.6
(22) Anmeldetag: 29.11.2002
(51) Int. Cl.: G06K 19/07

(54) **Sende- und Empfangseinrichtung für eine kontaktlose Datenübertragung**

(30) Priorität: 01.12.2001 DE 10158442; 29.11.2002 DE 10256099
(71) Anmelder: ATMEL Germany GmbH, 74072 Heilbronn (DE)
(72) Erfinder: Fischer, Martin, Dipl.-Ing., 74629 Gleichen (DE); Friedrich, Ulrich, Dipl.-Ing (FH), 74258 Ellhofen (DE); Karthaus, Udo, Dipl.-Ing., 89079 Ulm (DE); Ziebertz, Dirk, Dipl.-Ing., 74246 Eberstadt (DE)

(57) **Zusammenfassung**

Bekannte Sende- und Empfangseinrichtung für eine kontaktlose Datenübertragung mittels einer Rückstreuung weisen einen geringen Wirkungsgrad und eine geringe Reichweite insbesondere bei Verwendung in passiven Transpondern auf.
Mit der neuen Sende- und Empfangseinrichtung wird mittels einer Serienschaltung aus drei Kapazitäten (C1-C3) mit hoher Güte, wobei die mittlere Kapazität ein MOS-Varaktor (L2) ist, eine große Kommunikationsreichweite bei einer Rückstreuung eines Fragesignals, insbesondere bei Verwendung in passiven Transpondern (SE1) erreicht.

## Beschreibung

Die vorliegende Erfindung betrifft eine Sende- und Empfangseinrichtung für eine kontaktlose Datenübertragung, gemäß dem Oberbegriff des Patentanspruchs 1.

Ein derartige Sende- und Empfangseinrichtung ist aus der Druckschrift EP 599 143 A2 bekannt. Hierbei wird mittels einer spannungsgesteuerten Kapazität eines sogenannten "Varaktors" eine Phasenmodulation erzeugt, mit der ein von einem ersten Abfragerätes ausgesendetes Abfragesignal von einem Antwortgerät rückgestreut wird. Nachteilig ist, daß die offenbarte Sende- und Empfangseinrichtung eine geringen Wirkungsgrad aufweist und hierdurch die Kommunikationsreichweite erheblich einschränkt wird. Ferner ist nachteilig, daß die Herstellung der Sende- und Empfangseinrichtung durch den diskreten Aufbau sehr kostenintensiv ist.

Aufgabe der vorliegenden Erfindung ist es, eine Sende- und Empfangseinrichtung für eine kontaktlose Datenübertragung anzugeben, die einen hohen Wirkungsgrad aufweist und die einfach und kostengünstig herstellbar ist.

Diese Aufgabe wird erfindungsgemäß durch eine Vorrichtung der eingangs genannten Art mit den Merkmalen des Patentanspruches 1 gelöst. Günstige Ausgestaltungsformen sind Gegenstand von Unteransprüchen.

Hiernach besteht das Wesen der Erfindung darin, daß von einer Sende- und Empfangseinrichtung die Impedanz der Eingangsantenne mit geringen Verlusten geändert wird. Hierbei streut die Sende- und Empfangseinrichtung ein Fragesignal als Antwortsignal moduliert zurück, wobei die Sende- und Empfangseinrichtung eine integrierte Schaltungsanordnung mit wenigstens zwei Kontaktflächen zum Anschluß einer Antenne enthält und die integrierte Schaltungsanordnung zur Steuerung des rückgestreuten Anteils des Fragesignals zwischen den Kontaktflächen eine Serienschaltung aus einer ersten, einer zweiten und einer dritten Kapazität enthält, und hierbei die zweite Kapazität ein Varaktor ist. Ferner ist es vorteilhaft, wenn die zweite Kapazität ein MOS-Varaktor ist.

Ein Vorteil der neuen Sende- und Empfangseinrichtung besteht darin, daß sich die Impedanz bzw. die Rückstreuleistung bei einer Datenübertragung im Hochfrequenzbereich, beispielsweise bei 868 MHz, besonders wirkungsvoll verändern läßt, indem die Verluste durch Parasiten unterdrückt werden. Untersuchungen der Anmelderin haben gezeigt, daß sich mittels des MOS-Varaktors die Güte des Antenneschwingkreises wesentlich erhöht. Hierdurch wird die Kommunikationsreichweite gesteigert. Ferner wird durch die erste und dritte Kapazität eine Beeinflussung des Antennenkreises bei Anlegen einer Modulationsspannung an den Varaktor unterdrückt, da die Frequenz der Modulationsspannung wesentlich kleiner als die Frequenz des Trägersignals ist. Ferner wird durch die Integration der Kapazitäten in die integrierte Schaltung die Kosten des Zusammenbaus der Sende- Und Empfangseinrichtung erheblich gesenkt.
In einer Weiterbildung der Sende- und Empfangseinrichtung enthält die integrierte Schaltungsanordnung zur Erzeugung einer Impedanzänderung des MOS-Varaktors eine steuerbare Spannungsquelle. Hierdurch läßt sich besonders vorteilhaft die Rückstreuleistung verändern, wobei das rückgestreute Fragesignal eine Phasenmodulationskomponente enthält. Dies ist vorteilhaft, da eine Datenübertragung mittels einer Phasenmodulation störunempfindlicher ist, als eine Datenübertragung durch eine Last- oder Amplitudenmodulation. Untersuchungen der Anmelderin haben gezeigt, daß sich eine zuverlässige Datenübertagung und eine hohe Datenrate ergibt, sofern die imaginäre Phasenmodulationskomponente symmetrisch bezüglich der Realteilachse liegt. Ferner enthält die Sende- und Empfangseinrichtung eine Gleichrichtereinheit, die mittels Absorption des empfangenen Trägersignals eine Versorgungsspannung für die integrierte Schaltungsanordnung erzeugt. Hierdurch erübrigt sich eine Versorgungsspannungseinheit und die Sende- und Empfangseinrichtung lässt sich beispielsweise vorteilhaft als sogenannter passiver Transponder verwenden. Des Weiteren lässt sich mittels der Gleichrichtereinheit in Verbindung mit der Steuereinheit das empfangene Fragesignal demodulieren und die mit dem Fragesignal übertragenen Daten extrahieren. Ferner ist es vorteilhaft ein oder mehrere Sensoren zum Messen von Umgebungsdaten, wie beispielsweise Druck, Temperatur, Beschleunigung usw. zu integrieren. Hierdurch lässt sich nach dem Empfang eines Trägersignals die von der Transpondereinheit ermittelten Umgebungsdaten an eine das Trägersignal aussendende Basisstation übermitteln.

In einer anderen Weiterbildung enthält die Sende- und Empfangseinrichtung eine Versorgungsspannungseinheit zur Erzeugung einer Versorgungsspannung. Untersuchungen der Anmelderin haben gezeigt, dass sich die Versorgungsspannung besonders vorteilhaft mittels Batterien, insbesondere in einer Folienausführung, erzeugen lässt. Ferner lässt sich die Versorgungsspannung auch mittels anderen chemischen als auch physikalische Spannungsquellen erzeugen. Insbesondere ist es vorteilhaft die Versorgungsspannung mittels einer Solarzelle oder mittels eines Piezoelementes zu erzeugen. Durch die Ausführung der Sende - und Empfangsseinheit als Rückstreueinrichtung wird zum Senden des Antwortsignals, d.h. zum modulierten Zurückstreuen des Fragesignals bzw. des Trägersignals nur wenig Energie benötigt. Im Unterschied zu einer aktiven Sendeeinheit weist die integrierte Schaltung, als auch die gesamte Sende- und Empfangseinrichtung einen sehr geringen Stromverbrauch auf. Ferner wird von der Sende- und Empfangseinrichtung zur Erzeugung der Versorgungsspannung keine Energie aus dem Trägersignal absorbiert. Hierdurch erübrigt sich die Gleichrichtereinheit und die Kommunikationsreichweite lässt sich durch den vergrößerten Rückstreuanteil des empfangenen Trägersignals wesentlich erhöhen. Ferner ist es vorteilhaft, dass die Sende- und Empfangseinrichtung eine Signaldetektoreinheit enthält, die beispielsweise als sogenannte RSSI (received signal strengt indicator) ausgeführt ist. Hierdurch lässt sich die Stärke des empfangenen Trägersignal bestimmen und insbesondere als Mass für die Kommunikationssicherheit bzw. zur Steuerung der Höhe des Modulationshubes d.h. die Höhe der Modulationsspannung verwenden. Ferner lässt sich mit der Signaldetektoreinheit in Verbindung mit der Steuereinheit das empfangene Fragesignal demodulieren und die übertragenen Daten extrahieren.
In einer anderen Weiterbildung ist es vorteilhaft, enthält die Sende- und Empfangseinrichtung einen oder mehrere Sensoren, um mittels den Sensoren Umgebungsdaten zu ermitteln. Sofern notwendig lässt sich die Spannungsversorgung der Sensoren mittels der Versorgungsspannungseinheit durchführen. Eine Auswertung der ermittelten Umgebungsdaten, beispielsweise Temperatur oder Druck, lässt sich durch die Kontrolleinheit innerhalb der integrierten Schaltung durchführen und anschließend an eine weitere Sende- Empfangseinrichtung übermitteln. Ferner ist es auch vorteilhaft, die durch die Sensoren ermittelten Umgebungsdaten direkt, d.h. ohne weitere Auswertung innerhalb der Sende- und Empfangseinrichtung, beispielsweise als sogenannter semi-passiver Transponder, an eine weitere Sendeund Empfangseinrichtung, beispielsweise einer Basisstation, zu übertragen. Die Übertragung der Umgebungsdaten lässt sich beispielsweise erst nach einer der Aufforderung mittels eines Fragesignals der Basisstation durchführen. Hiermit lassen sich kostengünstige Kommunikationssysteme aufbauen die beispielsweise den Reifendruck an einem Kraftfahrzeug messen und die gemessenen Werte an die Basisstation übertragen. Als Sensoren zur Bestimmung der Umgebungstemperatur lassen sich in vorteilhafter Weise Halbleiterdioden verwenden.. Derartige Dioden sind einfach und kostengünstig in die integrierte Schaltung zu integrieren. Weiterhin vorteilhaft ist eine Speichereinheit, die als flüchtiger oder nichtflüchtiger Speicher ausgeführt ist, zu integrieren. Hierdurch lassen sich mehrere Umgebungsdaten und oder deren zeitlichen Verlauf ermitteln und in der Speichereinheit ablegen. Das Übertragen der Umgebungsdaten lässt sich hierdurch zu einem späteren Zeitpunkt durchführen.

In einer Weiterbildung des Sende- und Empfangseinrichtung ist es vorteilhaft, sofern die erste und die dritte Kapazität aus jeweils drei übereinanderliegende leitfähigen Schichten die auf einem Halbleiterträger aufgebracht sind, enthält, und zwischen der ersten und der zweiten leitfähigen Schicht eine dielektrische Schicht und zwischen der zweiten und der dritten leitfähigen Schicht eine Isolationsschicht eingezogen ist. Ferner ist es vorteilhaft, die dritte leitfähige Schicht niederohmig an ein Bezugspotential anzuschließen. Des Weiteren ist es vorteilhaft, daß die dritte leitfähige Schicht in ihrer flächenhaften Ausdehnung größer als die erste oder die zweite leitfähige Schicht ist. Ferner ist es vorteilhaft, daß die erste und die zweite Kapazität eine gemeinsame dritte leitfähige Schicht aufweisen. Hierdurch wird die Güte der seriellen Kapazitätsanordnung gesteigert und die Kommunikationsreichweite erhöht.
Die angegebene Sende- und Empfangseinrichtung läßt sich in besonders vorteilhafter Weise zum Aufbau einer Kommunikationseinrichtung bestehend aus der Sende-und Empfangseinrichtung, beispielsweise ein Transponder, zum Rückstreuen eines von einer ersten Sende- und Empfangseinrichtung, beispielsweise eine Basisstation, ausgesendeten Fragesignals verwenden. Insbesondere bei Verwendung von passiven Transpondern, d.h. Transpondern, die die Energie zur Versorgung der integrierten Schaltung aus dem elektromagnetischen Feld der Basisstation beziehen, läßt sich mit der Serienschaltung der Kapazitäten in Verbindung mit deren hohen Güten, eine Erhöhung der Kommunikationsreichweite auf mehrere Meter erzielen. Eine weitere Erhöhung der Kommunikationsreichweite lässt sich mittels einer semi-passiven Transponderausführung erzielen. Hierbei wird keine Energie aus dem HF-Feld zur Versorgung der anderen Einheiten, wie beispielsweise der Steuereinheit, benötigt. Untersuchungen der Anmelderin haben gezeigt, dass sich insbesondere bei einer semi-passiven Transponderausführung mittels eines Piezoelementes zur Erzeugung der Versorgungsspannung, eine kostengünstige und umweltschonende Möglichkeit zur Kontrolle des Reifendruckes bei Kraftfahrzeugen herstellen lässt.

Die erfindungsgemäße Vorrichtung soll nachfolgend anhand der Ausführungsbeispiele im Zusammenhang mit mehreren schematisierten Zeichnungen erläutert werden. Es zeigen, die
- Fig. 1a: eine Sende- und Empfangseinrichtung mit einer Serienschaltung von Kapazitäten am Antenneneingang der integrierten Schaltung, und
- Fig. 1b: eine Sende- und Empfangseinrichtung und mit einer Serienschaltung von Kapazitäten und einer Versorgungsspannungseinheit, und
- Fig. 2a: ein Querschnitt der Schichtabfolge der Kapazität der integrierten Schaltungsanordnung, und
- Fig. 2b: eine Draufsicht auf die layouteten Kapazitäten.

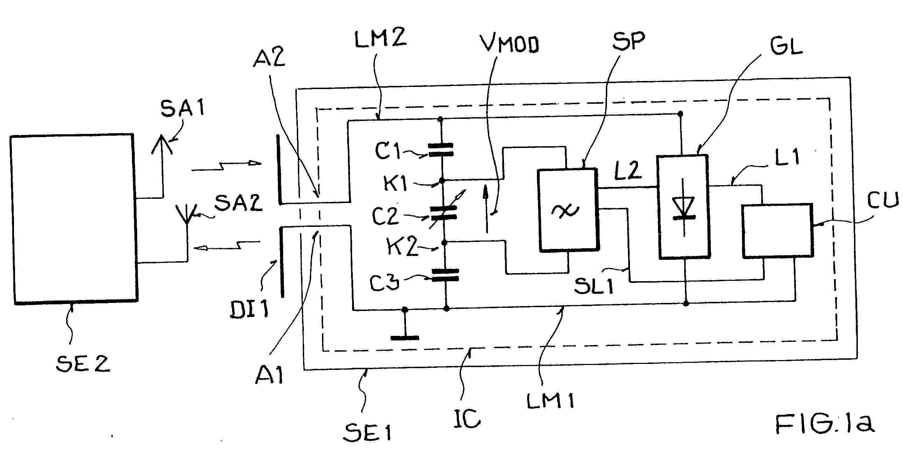

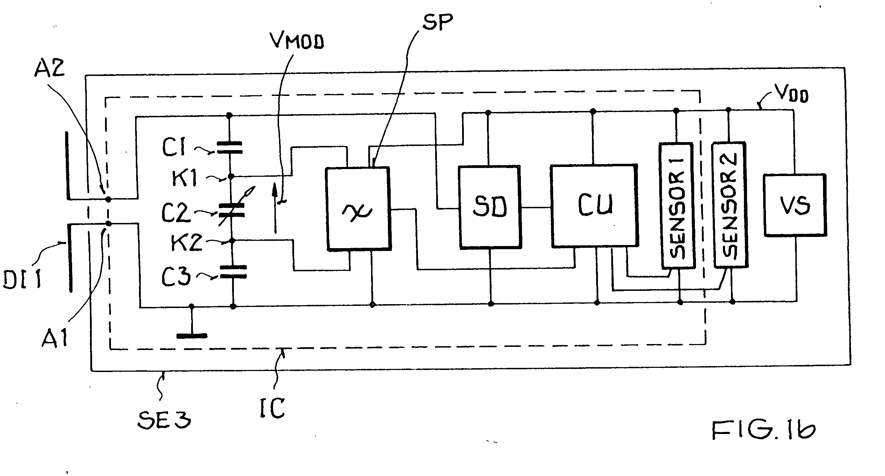

In Figur 1a ist eine Hochfrequenz-Kommunikationseinrichtung für eine bidirektionale, kontaktlose Datenübertragung bestehend aus einer Sende- und Empfangseinrichtung SE2, beispielsweise eine Basisstation, und einer Sende- und Empfangseinrichtung SE1, beispielsweise ein passiver Transponder, dargestellt. Hierbei wird von der Sende- und Empfangseinrichtung SE2 ein Fragesignal mittels einer Sendeantenne SA1 ausgesandt, welches von der Sende- und Empfangseinrichtung SE1 als Antwortsignal moduliert und rückgestreut wird. Von der Sende- und Empfangseinrichtung SE2 wird das rückgestreute Signal mittels einer Antenne SA2 empfangen. Im Folgenden wird der Aufbau der Sende- und Empfangseinrichtung SE1 erläutert.

Die Sende- und Empfangseinrichtung SE1 weist eine Dipolantenne DI1 und eine integrierte Schaltung IC auf. Hierbei ist die Dipolantenne DI1 mittels den beiden Kontakten A1 und A2 mit der integrierten Schaltung IC verbunden. Innerhalb der integrierten Schaltung IC ist der Kontakt A1 mittels der Leitung LM1 mit einem Bezugspotential, der Kontakt A2 mit der Leitung LM2 verschaltet. Des Weiteren ist mit der Leitung LM1 und der Leitung LM2 eine Serienschaltung aus einen ersten Kapazität C1, einem MOS-Varaktor C2 und einer Kapazität C3. Hierbei weist die Serienschaltung zwischen der Kapazität C1 und der Kapazität C2 den Knoten K1 und zwischen der Kapazität C2 und der Kapazität C3 den Knoten K2 auf. Mit den Knoten K1 und K2 ist eine steuerbare Spannungsquelle SP verschaltet, die an den Varaktor C2 eine Spannung VMOD anlegt. Ferner ist mit der Leitung LM1 und der Leitung LM2 ein Gleichrichter GL verschaltet. Der Gleichrichter GL ist mit einer Leitung L1 mit einer Steuereinheit CU verschaltet. Ferner ist der Gleichrichter GL mit der Spannungsquelle SP verschaltet. Die Steuereinheit CU ist mit der Leitung LM2 verschaltet. Ferner ist die Steuereinheit CU mit einer Leitung SL1 mit der steuerbaren Spannungsquelle SP verschaltet.
Im Folgenden wird die Funktionsweise der Sende- und Empfangseinrichtung SE1 erläutert. Mittels der Dipolantenne DI1 wird das von der Sende- und Empfangseinrichtung SE2 ausgesendete HF-Signal von dem Transponder empfangen. Hierbei wird ein Teil des Signals absorbiert und mittels des Gleichrichter GL eine Versorgungsspannung für die integrierte Schaltungsanordnung IC erzeugt. Ein anderer Teil des empfangenen Signal wird zurückgestreut. Ferner enthält die Gleichrichtereinheit GL einen Signaldetektor (RSSI). Wobei der Ausgang des Signaldedektors der Steuereinheit CU über die Leitung L1, die als Busleitung ausgebildet ist, zugeführt. Bei einer ausreichenden Versorgungsspannung wird von der Steuereinheit CU mittels der Spannungsquelle SP die Spannung VMOD an den MOS-Varaktor C2 angelegt. Mit Höhe der Spannung VMOD wird die Kapazität des MOS-Varaktors C2 geändert. Hierdurch wird die Impedanz der gesamten mit der Leitung LM1 und der Leitung LM2 verbunden Schaltungsteile geändert. Mittels der Impedanzänderung wird der Anteil der absorbierten bzw. rückgestreuten Signals geändert. Die Änderung des rückgestreuten Anteils erzeugt eine Phasenmodulation des zurückgestreuten Signals. Hierbei ist die Frequenz der Spannung VMOD klein gegenüber der Frequenz des empfangenen HF-Signals. Hierdurch läßt sich mittels den Kapazitäten C1 und C3 eine Beeinflußung des auf den Leitungen LM1 und LM2 liegenden HF-Signals unterdrücken. Um die Verluste der Anordnung zu verringern, werden in der Serienschaltung der Kapazitäten C1 bis C3 vorzugsweise Kondensatoren mit einer hohen Güte, d.h. mit einen geringen Realteil und hohem Imaginärteil, eingesetzt. Hierdurch wird erreicht, daß eine wirkungsvolle Phasenmodulation durch die Spannung VMOD erzeugt wird. Ferner wird die Reichweite für die Datenübertragung erhöht, da die Signalabsorption im Wesentlichen durch den Gleichrichter GL und nicht in der Serienschaltung der Kondensatoren erfolgt.

In Figur 1b ist eine Sende- und Empfangseinrichtung SE3, beispielsweise ein semi-passiver Transponder, dargestellt. Hierbei wird von der Sende- und Empfangseinrichtung SE2 ein Fragesignal ausgesandt, welches von der Sende- und Empfangseinrichtung SE3 als Antwortsignal moduliert und rückgestreut wird. Von der Sende- und Empfangseinrichtung SE2 wird das rückgestreute Signal empfangen. Im Folgenden wird der Aufbau der Sende- und Empfangseinrichtung SE3 erläutert, soweit dieser von dem Aufbau der Sende- und Empfangseinrichtung SE1 abweicht.

Innerhalb der integrierten Schaltung IC ist der Kontakt A1 mittels einer Bezugspotentialleitung, der Kontakt A2 mit dem Kondensator C1 und mit einer Signaldetektoreinheit SD verschaltet. Ferner ist die Signaldetektoreinheit SD mit der Versorgungsspannungsleitung verschaltet an der eine Versorgungsspannungseinheit VS die Versorgungsspannung VDD anlegt. Des weiteren ist die Spannungsquelle SP mit der Versorgungsspannungsleitung verbunden. Ferner ist die Steuereinheit CU mit der Versorgungsspannungsleitung und mit der Signaldetektoreinheit SD verschaltet. Des Weiteren ist die Steuereinheit CU mit einem ersten Sensor SENSOR1 und einem zweiten Sensor SENSOR2 verbunden. Diese beiden Sensoren SENSOR1 und SENSOR2 sind ferner mit der Versorgungsspannungsleitung und der Bezugspotentialleitung verschaltet. Ferner ist der Sensor SNESOR2 und die Versorgungsspannungseinheit VS nicht innerhalb der integrierten Schaltung IC angeordnet.

Im Folgenden wird die Funktionsweise der Sende- und Empfangseinrichtung SE3 erläutert. Mittels der Dipolantenne DI1 wird das von der Sende- und Empfangseinrichtung SE2 ausgesendete HF-Signal von dem Transponder empfangen. Im Unterschied zu der in Zusammenhang mit den Zeichnungsunterlagen der Fig. 1a erläuterten Sende- Empfangseinrichtung SE1 wird nur ein sehr geringer Teil des Signals absorbiert, da die Versorgungsspannung VDD von der Versorgungsspannungseinheit VS, die beispielsweise als Folienbatterie ausgebildet ist, erzeugt wird. Zur Übertragung von Daten von der Sende- und Empfangseinrichtung SE3 an die Sende- und Empfangseinrichtung SE2 wird durch die Variation der Spannung VMOD eine Impedanzänderung im Antennenkreis erzeugt und die Phase des rückgestreuten Signal geändert (PSK-Modulation). Sofern der Antennenkreis nicht vollständig verstimmt wird bleibt die Höhe des rückgestreuten Signals im zeitlichen Mittel nahezu gleich. Ferner ist die Frequenz der Spannung VMOD klein gegenüber der Frequenz des empfangenen HF-Signals. Zur Erhöhung der Kommunikationssicherheit wird die Feldstärke des ankommenden Trägers von der Signaldetektoreinheit SD, die beispielsweise als RSSI Schaltung ausgeführt ist, bestimmt und der Steuereinheit CU, die beispielsweise als Zustandsmaschine oder als Mikroprozessor ausgeführt ist, mitgeteilt. Ferner wird mittels der Signaldetektoreinheit SD in Verbindung mit der Steuereinheit CU die Daten des Fragesignals extrahiert. Des Weiteren lassen sich die mittels den Sensoren SENSOR1 und SENSOR2 ermittelten Umgebungsdaten mittels der Steuereinheit CU und mittels der Spannungsquelle SP auf die rückgestreute Trägerwelle aufmodulieren. Des Weiteren ist die Reichweite der Datenübertragung im Unterschied zu der Sende- und Empfangseinrichtung SE2 wesentlich erhöht, da keine Signalabsorption durch den Gleichrichter GL erfolgt.

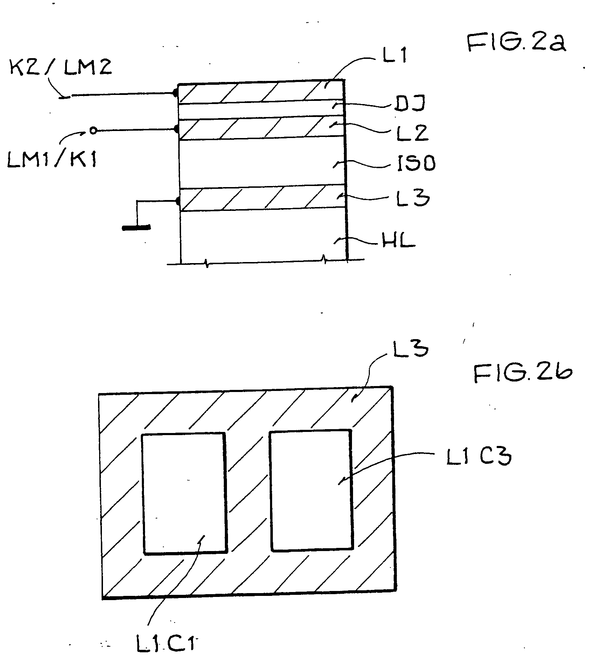

In der Figur 2a ist eine Abfolge von Halbleiterschichten für die Kapazitäten C1 und C3 dargestellt, mittels der sich Kondensatoren hoher Güte innerhalb eines Standard CMOS Prozesses herstellen lassen. Im Folgenden wird die Abfolge der Schichten erläutert. Auf einem Halbleiterträger HL wird eine leitfähige Schicht L3, beispielsweise durch Dotierung oder Metallisierung, erzeugt. Diese vorzugsweise sehr niederohmige Schicht L3 wird mit dem Bezugspotential verschaltet. Auf der Schicht L3 wird eine isolierende Schicht, beispielsweise durch eine CVD-Abscheidung oder Oxidation erzeugt, deren Dicke vorzugsweise oberhalb einem µm liegt. Nachfolgend wird eine möglichst niederohmige leitfähige Schicht L2, beispielsweise aus dotiertem Polysilizium mittels Abscheideprozesses oder aus Metall, erzeugt. Die Schicht L2 wird entweder mit dem Knoten K1, bei der Verwendung als Kapazität C1 oder mit der Leitung LM1 bei der Verwendung als Kapazität C3 verschaltet. Nachfolgend wird eine dünne dielektrische Schicht, beispielsweise aus Nitrid mittels eines CVD-Prozesses, erzeugt. Die Dicke der Schicht liegt vorzugsweise im Bereich von weinigen Zehntel µm. Nachfolgend wird eine möglichst niederohmige Schicht L1, beispielsweise aus Polysilizium oder aus Metall erzeugt, die mit dem Knoten K2 oder mit der Leitung LM2 verschaltet wird. Mittels des Anschlusses der Schicht L3 die möglichst niederohmig mit dem Bezugspotential verschaltet ist, wird die Güte der Kapazität C1 bzw. C3 wesentlich erhöht, d.h. der Realteil stark erniedrigt. Bei der Umsetzung in das Layout wird die Fläche der Schicht L3 größer als die Fläche der Schichten L2, L1 gewählt.

In der Figur 2b ist die Anordnung der beiden Kapazitäten C1 und C3 im Layout dargestellt. Hierbei weisen beide Kapazitäten C1 und C3 eine gemeinsame Schicht L3 auf., wobei die flächenhafte Ausdehnung der Schicht L3 größer als die Summe der Flächen der Schicht L1C1 und der Schicht L1C3 gewählt wird. Ein Vorteil der gemeinsamen Schicht L3 ist, der sehr niederohmige Anschluß an das Bezugspotential und ein geringer Flächenverbrauch in der integrierten Schaltung IC.

Die integrierte Schaltungsanordnung wird einem Einsatz in einem Transponder durch weitere Funktionseinheiten erweitert. Insbesondere wird von der Steuereinheit eine Demodulation des empfangenen Signals und eine Auswertung der Daten durchgeführt, wie er beispielsweise bei einem Identifikationsprozeß im Rahmen einer Authentifizierung notwendig ist.

## Patentansprüche

1. Sende- und Empfangseinrichtung (SE1, SE3) für eine kontaktlose Datenübertragung die ein Fragesignal als Antwortsignal moduliert zurückstreut, und die Sende- und Empfangseinrichtung (SE1, SE3) eine integrierte Schaltungsanordnung (IC) mit wenigstens zwei Kontaktflächen (A1, A2) zum Anschluß einer Antenne (DI1) enthält,
**dadurch gekennzeichnet, daß**
die integrierte Schaltungsanordnung (IC) zur Steuerung des rückgestreuten Anteils des Fragesignals zwischen den Kontaktflächen (A1, A2) eine Serienschaltung aus einer ersten, einer zweiten und einer dritten Kapazität (C1, C2, C3) enthält, und die zweite Kapazität (C2) ein Varaktor ist.

2. Sende- und Empfangseinrichtung nach Anspruch 1, **dadurch gekennzeichnet, daß** die zweite Kapazität ein MOS-Varaktor (C2) ist.

3. Sende- und Empfangseinrichtung (SE1, SE3) nach Anspruch 2, **dadurch gekennzeichnet, daß** die integrierte Schaltungsanordnung (IC) zur Erzeugung einer Impedanzänderung des MOS-Varaktors (C2) eine steuerbare Spannungsquelle (SP) enthält.

4. Sende- und Empfangseinrichtung (SE1, SE3) nach einem der Ansprüche 1 bis 3, **dadurch gekennzeichnet, daß** der rückgestreute Anteil der Fragesignals eine Phasenmodulationskomponente enthält.

5. Sende- und Empfangseinrichtung (SE1, SE3) nach Anspruch 4, **dadurch gekennzeichnet, daß** die Phasenmodulationskomponente symmetrisch bezüglich der Realteilachse liegt.

6. Sende- und Empfangseinrichtung (SE1, SE3) nach einem der Ansprüche 1 bis 5, **dadurch gekennzeichnet, daß** die integrierte Schaltungsanordnung (IC) zur Erzeugung einer Versorgungsspannung eine Gleichrichtereinheit (GL) enthält.

7. Sende- und Empfangseinrichtung (SE1, SE3) nach einem der Ansprüche 1 bis 5, **dadurch gekennzeichnet, daß** die Sende- und Empfangseinrichtung (SE1, SE3) zur Erzeugung einer Versorgungsspannung (VDD) eine Versorgungsspannungseinheit (VS), insbesondere eine Batterie, enthält.

8. Sende- und Empfangseinrichtung (SE1, SE3) nach Anspruch 7, **dadurch gekennzeichnet, daß** die integrierte Schaltungsanordnung (IC) zur Ermittlung der Signalstärke eine Signaldetektoreinheit (SD) enthält.

9. Sende- und Empfangseinrichtung (SE1, SE3) nach Anspruch 7 oder Anspruch 8, **dadurch gekennzeichnet, daß** die Sende- und Empfangseinrichtung (SE1, SE3) zur Ermittlung von Umgebungsgrößen wenigstens einen Sensor (SENSOR1, SENSOR2) enthält.

10. Sende- und Empfangseinrichtung (SE1, SE3) nach Anspruch 7 oder Anspruch 8, **dadurch gekennzeichnet, daß** die integrierte Schaltungsanordnung (IC) eine Speichereinheit enthält.

11. Sende- und Empfangseinrichtung (SE1, SE3) nach einem der Ansprüche 1 bis 10, **dadurch gekennzeichnet, daß** die erste und die dritte Kapazität (C1,C3) jeweils drei übereinanderliegende leitfähigen Schichten (L1, L2 ,L3), die auf einem Halbleiterträger (HL) aufgebracht sind, enthält, und zwischen der ersten und der zweiten leitfähigen Schicht (L1, L2) eine dielektrische Schicht (Dl), und zwischen der zweiten und der dritten leitfähigen Schicht (L2, L3) eine Isolationsschicht (ISO) eingezogen ist.

12. Sende- und Empfangseinrichtung (SE1, SE3) nach Anspruch 11, **dadurch gekennzeichnet, daß** die dritte leitfähige Schicht (L3) einen niederohmigen Anschluß an ein Bezugspotential enthält und von ihrer flächenhaften Ausdehnung größer als die erste oder die zweite leitfähige Schicht (L1,L2) ist.

13. Sende- und Empfangseinrichtung (SE1, SE3) nach Anspruch 12, **dadurch gekennzeichnet, daß** die erste und die zweite Kapazität (C1, C2) eine gemeinsame dritte leitfähige Schicht (L3) enthält.

14. Verwendung der Sende- und Empfangseinrichtung (SE1, SE3) nach einem der vorangegangenen Ansprüchen zum Aufbau einer Kommunikationseinrichtung, bestehend aus der Sende- und Empfangseinrichtung (SE1, SE3) zum Rückstreuen eines von einer Sende- und Empfangseinrichtung (SE2) ausgesendeten Fragesignals.

15. Verwendung der Sende- und Empfangseinrichtung (SE1, SE3) nach Anspruch 14 zum Aufbau einer Kommunikationseinrichtung, bestehend aus einer passiven Sende- und Empfangseinrichtung (SE1, SE3).

16. Verwendung der Sende- und Empfangseinrichtung (SE1, SE3) nach Anspruch 14 zum Aufbau einer Kommunikationseinrichtung, bestehend aus einer semi-passiven Sendeund Empfangseinrichtung (SE1, SE3).

17. Verwendung der Sende- und Empfangseinrichtung (SE1, SE3) nach Anspruch 16 zur Kontrolle des Reifendruckes, wobei die Versorgungsspannung mittels eines piezoelektrischen Elementes erzeugt wird.
